# FASCICULE DE BREVET EUROPEEN

(11) **EP 1 444 932 B1**
(45) Date de publication et mention de la délivrance du brevet: **25.01.2006**
(21) Numéro de dépôt: 03002817.9
(22) Date de dépôt: 07.02.2003
(51) Int. Cl.: A47J 31/40

(54) **Module d'extraction à fermeture linéaire pour la préparation sous pression d'une boisson à partir d'une capsule**
Linearextraktionsmodul zur zubereitung von einem Getränk aus einer kartusche
Linear extraction unit for the preparation under pressure of a drink from a cartridge

(43) Date de publication de la demande: 11.08.2004
(73) Titulaire: NESTEC S.A., 1800 Vevey (CH)
(72) Inventeur: Jarisch, Christian, CH-8590 Romanshorn (CH); Yoakim, Alfred, CH-1806 St-Legier-La Chiesaz (CH)
(74) Mandataire: Borne, Patrice Daniel

(56) Documents cités:
- EP-A- 0 512 142
- EP-A- 1 121 882
- US-A- 5 755 149
- US-B1- 6 182 554

## Description

L'invention se rapporte au domaine de la préparation de boissons utilisant le principe d'extraction d'une substance contenue dans un élément de recharge, appelé communément "capsule", par traversée d'un flux d'eau sous pression. L'invention se rapporte plus particulièrement à un module d'extraction destiné à équiper une machine de préparation de boissons telle qu'une machine à café.

Il est connu de préparer des boissons telles que du café, du thé ou du chocolat chaud, à partir de capsules contenant une dose prédéterminée d'une substance à extraire. Le format en capsule offre l'avantage de faciliter les opérations de préparation de la boisson, d'assurer une préparation propre, comme sans déchet de marc visible, ainsi que de contrôler la reproductibilité et la qualité du produit préparé.

Le principe de l'extraction d'une capsule consiste généralement à (i) enfermer la capsule dans une chambre résistante à la pression, (ii) percer l'une des faces de la capsule, (iii) introduire une quantité d'eau chaude dans la capsule de façon à créer un environnement clos sous pression afin de produire l'extrait liquide de café ou autre, (iv) libérer l'extrait liquide au travers de la face opposée de la capsule et, (v) recueillir l'extrait dans un container de capacité appropriée tel qu'uné tasse.

Le problème de chargement de la capsule et son évacuation dans le système d'extraction a déjà fait l'objet de nombreuses publications de brevets.

Dans la demande de brevet EP 1090574 A1, il s'agit d'un dispositif d'extraction comprenant une paire de mâchoires avec une partie de mâchoire fixe et une partie de mâchoire mobile cette dernière étant montée de manière articulée et déportée sur la partie fixe et un mécanisme de levier de fermeture à plusieurs branches est associé pour refermer la partie mobile sur la partie fixe.

Dans le document publié WO 01/30218 A1, le principe est similaire mais il est prévu, en plus, un mécanisme d'éjection de la capsule associé à un bras de traction de la mâchoire mobile de façon à décoller la capsule du fond de la chambre d'extraction au moment de la réouverture de la mâchoire.

Il ressort de ces principes qu'un dispositif de fermeture à deux parties, dont l'une est fixe et l'autre est mobile, associé ou non à un éjecteur, est connu. Seulement, ces dispositifs sont essentiellement des dispositifs à fermeture manuelle et se prêtent peu à l'automatisation de la fonction de fermeture. Il est aussi à remarquer que du fait du déport des axes d'articulation, de tels systèmes doivent être conçus et montés avec précision de façon à éviter les jeux et les problèmes d'ajustement des pièces.

La demande de brevet WO 95/17121 se rapporte à un dispositif comprenant un groupe formé d'un piston fixe et d'un corps cylindrique mobile, le groupe étant placé en vis-à-vis d'une chaudière. La chaudière, d'une part, le piston fixe et le corps cylindrique d'autre part, sont séparés par une zone où sont positionnés les moyens de réception, de maintien en position et d'éjection des conditionnements. Les moyens de maintien et les moyens de réception sont des moyens différents; les premiers n'étant pas entièrement rétractables et étant placés directement entre la chaudière et le corps cylindrique pour maintenir les bords latéraux du conditionnement, les seconds étant rétractables et placés sur un côté du corps cylindrique pour simplement arrêter le conditionnement à l'encontre des forces de gravité. Un tel dispositif est complexe car il met en jeu différentes pièces pour à la fois retenir et centrer correctement la capsule (ou conditionnement) en place dans la chambre d'extraction. Cela implique plusieurs mécanismes séparés de déplacement des moyens pour permettre de fermer le système d'extraction. La position décalée des moyens de maintien peut aussi poser des problèmes de blocage ou d'usure prématurée. De plus, un tel dispositif est aussi relativement encombrant en raison de la position périphérique du moyen de maintien et de celle de la chaudière.

La demande de brevet WO 98/47418 se rapporte à un procédé de transformation d'une machine à café express, qui fonctionne en extraction verticale avec des pastilles prédosées utilisées dans un plan horizontal en une machine à café express qui fonctionne en extraction horizontal avec des pastilles pré-dosées utilisables dans un plan vertical. La machine est munie de moyens de réception et d'éjection constitués d'un seul élément escamotable déplaçable en dessous de l'organe d'extraction au moyen d'un moyen électromécanique de manoeuvre séparé des moyens d'actionnement de l'organe d'extraction.

La demande de brevet WO 00/38558 concerne une chambre d'extraction pour machine automatique composée de deux parties mobiles dans un plan horizontal, dont l'une est alimentée en eau chaude, l'autre possédant un filtre; les deux parties étant montées oscillantes verticalement l'une en face de l'autre selon leur axe transversal.

La demande de brevet WO 00/44868 se rapporte à un dispositif d'extraction comportant une chambre d'extraction composée de deux parties mobiles dans un mouvement horizontal de manière à pouvoir s'écarter ou se rapprocher l'une de l'autre; les parties étant montées sur un arbre excentrique apte à leur transmettre des mouvements oscillatoires de sens inverses, et le dispositif comportant une liaison pivot freinée entre chaque arbre à excentrique et chaque partie mobile, afin de combiner un mouvement horizontal et un mouvement oscillatoire pour l'enchaînement des phases d'ouverture et de fermeture de la chambre d'extraction.

Le brevet US 6,182,554 se rapporte à un porte-capsule pour cartouche filtre dans lequel est logé un élément mobile muni de bras d'éjection. Un tel dispositif n'est pas adapté pour l'insertion d'une capsule en position inclinée du dispositif. De plus, un tel dispositif est complexe et difficile à nettoyer.

La présente invention vise à proposer un dispositif d'extraction facilitant l'insertion, le positionnement correct et l'éjection d'une capsule tout en remédiant aux inconvénients des dispositifs de l'art antérieur.

Pour cela, l'invention se rapporte à un module d'extraction selon la revendication 1.

Ainsi, à la différence des dispositifs connus de l'art antérieur, l'alignement selon un même axe de déplacement permet au dispositif de gagner en fiabilité en évitant les blocages et aussi de gagner en réduction de l'encombrement. Le premier sous-ensemble peut comprendre une base sur laquelle le moyen de retenue et de positionnement peut être monté et guidé en glissement pour se déplacer le long de cette base.

Les fonctions retenue et de positionnement selon plusieurs axes de direction sont assurées par un seul élément; ce qui rend le dispositif plus simple, plus fiable et plus compact.

La retenue et le centrage correct de la capsule selon plusieurs directions dans le plan de fermeture peut être obtenu, par exemple, par un moyen de retenue et de positionnement possédant une portion de cylindre ouvert destinée à retenir et centrer la capsule et une portion de guidage annulaire montée autour de la base du sous-ensemble d'extraction.

Dans un mode préférentiel, des moyens d'éjection de la capsule sont prévus pour éjecter la capsule en dehors du module. La capsule étant sensiblement humide et appliquée intimement contre les surfaces des moyens d'extraction en raison de l'effet de pression, les moyens d'éjection permettent de décoller la capsule après chaque extraction. Les moyens d'éjection permettent aussi d'assister à l'expulsion de la capsule même à des inclinaisons faibles du module par rapport à l'horizontale.

De préférence, les moyens d'éjection pour éjecter la capsule sont commandés, lors de l'ouverture, par l'action de retour linéaire en dégagement du second sous-ensemble mobile par rapport au premier sous-ensemble d'extraction. Cette configuration participe aussi à la simplification du système.

Plus spécifiquement, le moyen de retenue et de positionnement est verrouillé, en position repoussée, lors de la fermeture des sous-ensembles d'extraction et est déverrouillé, en position de retenue, seulement après l'éjection de la capsule par les moyens d'éjection. Le déverrouillage du moyen de retenue et de positionnement en position repoussée peut être réalisé directement par l'action de retour linéaire en dégagement du sous-ensemble d'extraction mobile. Le moyen de retenue et de positionnement peut alors retourner en position de retenue sous l'effet de rappel d'un moyen élastique tel qu'un ou plusieurs ressorts de rappel ou tout moyen équivalent.

L'indexation de la commande de déverrouillage du moyen de retenue et de positionnement par rapport à l'éjection de la capsule conduit à un automatisme contrôlé et séquentiel fiable qui permet de s'assurer que l'éjection de la capsule se fait alors qu'un espace suffisant est laissé entre les sous-ensembles d'extraction et que le moyen de retenue et de positionnement n'est pas encore replacé en position de retenue d'une nouvelle capsule.

L'actionnement des moyens d'éjection peut revêtir différentes formes. Dans un exemple préférentiel, les moyens d'éjection sont mis en tension élastique lors de la fermeture des deux sous-ensembles d'extraction et libérés de leur tension élastique pour activer l'éjection au moment de la réouverture des deux sous-ensembles. L'avantage d'un tel principe est de permettre d'indexer l'éjection à l'ouverture des sous-ensemble d'extraction sans avoir à recourir à un mécanisme séparé de commande de l'éjection ou de contrôle électrique ou électronique de l'ouverture. Par exemple, les moyens d'éjection peuvent être constitués d'un levier en forme de bague, articulé sur le sous-ensemble d'extraction fixe. Le levier peut être mis en tension au contact d'au moins une lame élastique ou tout autre moyen équivalent supporté par le moyen de retenue et de positionnement.

Le sous-ensemble d'extraction mobile comprend, de préférence, des moyens d'actionnement linéaires, de préférence du type à piston, activables en fermeture par des moyens hydrauliques ou électriques.

Dans un mode préféré, le premier sous-ensemble d'extraction est fixe. Il comprend une zone de réception de la capsule muni d'éléments en relief pour l'ouverture de la capsule. Le second sous-ensemble mobile comprend une zone de réception complémentaire de la capsule et des moyens d'alimentation en eau de la capsule.

D'autres caractéristiques et avantages de l'invention seront mieux compris en regard des dessins annexés ci-joints qui représentent un exemple préféré de l'invention.
La figure 1 est un vue en perspective générale du module selon l'invention dans une configuration d'insertion d'une capsule;
La figure 2 est une vue en coupe selon I-I de la figure 1 dans la même configuration avec une capsule maintenue en place;
La figure 3 est une vue en coupe selon II-II de la figure 2 dans une configuration inclinée d'insertion d'une capsule;
La figure 4 est une vue en perspective éclatée du module selon l'invention;
La figure 5 est une vue en coupe selon I-I de la figure 1 mais en configuration de fermeture du module autour d'une capsule;
La figure 6 est une vue en coupe selon II-II de la figure 1 mais dans une configuration d'éjection de la capsule;
La figure 7 est une vue de détail du moyen de retenue et de positionnement du module de l'invention.

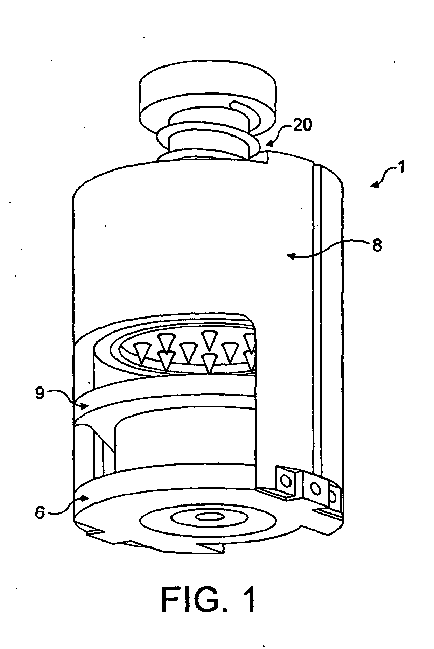

En référence aux figures 1 à 5, le module d'extraction 1 comprend des moyens d'extraction permettant de réceptionner une capsule 12 et d'en extraire un extrait liquide par application d'eau sous pression au travers de la capsule. Les moyens d'extraction comportent un premier sous-ensemble 10, de préférence, fixe, et un second sous-ensemble 11, de préférence, mobile, coopérant en fermeture avec le sous-ensemble 10. Les sous-ensembles 10, 11 ont chacun une zone de réception, respectivement, 2 et 5, pour recevoir chacun une face de la capsule au moment de la fermeture. La zone de réception du premier sous-ensemble 10 possède des éléments d'ouverture 22 de la capsule, en général des éléments en relief tels qu'une pluralité de zones pyramidales faisant partie d'une plaque de distribution de pression 21.

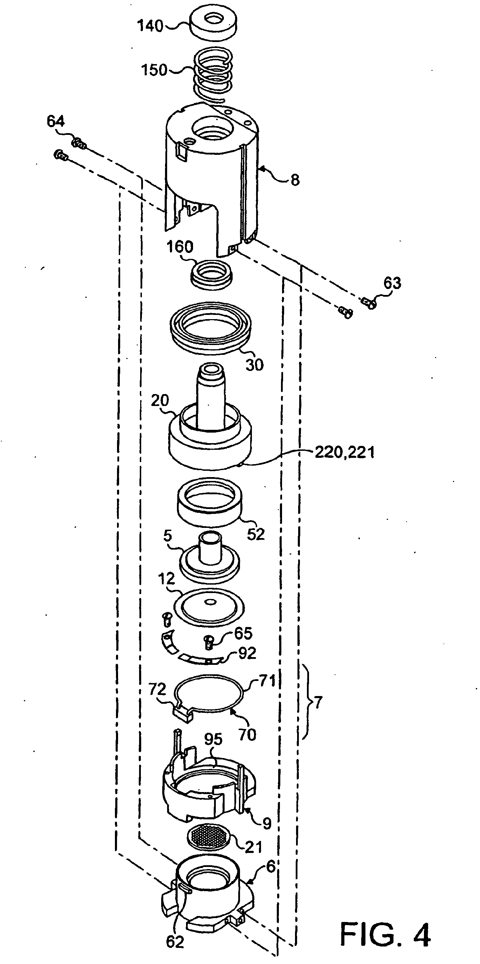

Le sous-ensemble fixe 10 possède une base ou tronc 6 laquelle est traversée par un canal d'écoulement 60 pour permettre à l'extrait liquide de s'écouler de la chambre d'extraction. La base 6 est solidarisée à un corps principal 8 sur les côtés par exemple, comme le montre la figure 4. Le corps 8 et la base 6 délimitent un espace intérieur 14 avec, un côté d'insertion comprenant une fente 15 et un côté d'éjection comprenant une lumière de sortie 16 pour la capsule.

Le corps comprend aussi un alésage central 80 permettant le passage d'un piston 20 faisant partie du sous-ensemble d'extraction mobile. Le piston est monté au travers de l'alésage 80 du corps et est relié de manière solidaire à une douche d'extraction 5 comprenant une zone réception munis d'éléments de perçage 50 destinés à ouvrir la capsule. Le piston 20 et la douche 5 sont montés solidairement de manière coaxiale et possèdent un canal d'arrivée d'eau 51 agencé de manière à distribuer de l'eau au travers de la douche 5.

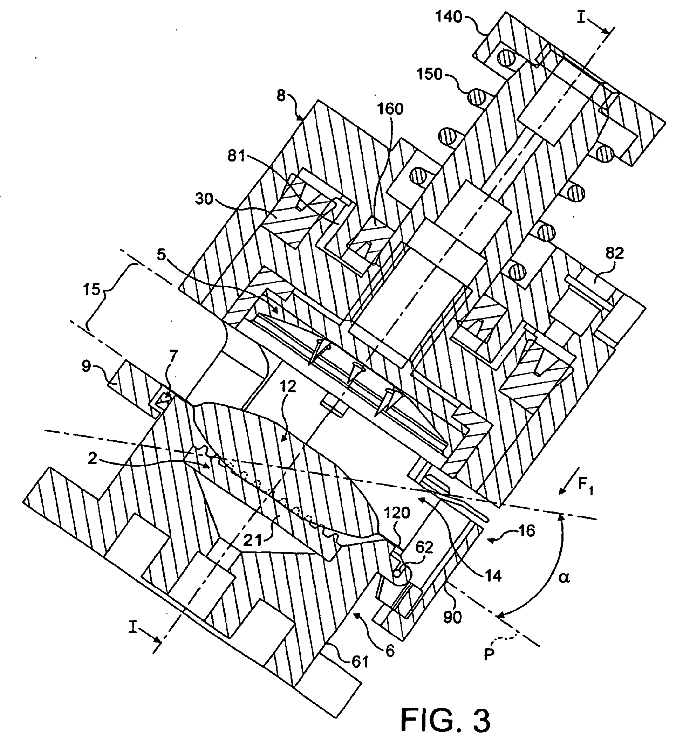

Le piston est monté élastiquement au travers du corps à l'encontre d'un ressort de compression 150 positionné entre une bague 140 fixée à l'extrémité du piston et un logement du corps. L'étanchéité entre le piston et l'intérieur du corps est réalisée par des joints 30, 160 positionnés de part et d'autre d'une chicane annulaire formée entre le piston et l'intérieur du corps. Entre les deux joints 30, 160 est ainsi délimité une chambre de pression 81 expansible sous l'effet d'un fluide hydraulique entrant dans la chambre, lequel est alimenté au travers d'une entrée de fluide 82 située sur le haut du corps (figure 3).

On comprend donc que le sous-ensemble mobile formé essentiellement du piston 20 et de la douche 5 est maintenu en position d'ouverture de la chambre d'extraction, c'est à dire, en position éloignée de la zone de réception du sous-ensemble fixe par l'effet de compression du ressort 150 qui agit entre la bague 140 du piston et le corps 8. De la sorte, en appliquant un fluide hydraulique dans la chambre de pression 81, le ressort est comprimé de façon à pousser solidairement le piston et la douche dans la direction de fermeture F1.

Dans la configuration d'ouverture des figures 1 à 3, un espace suffisant 14 est maintenu entre les deux zones de réception opposées 2, 5 pour pouvoir insérer une capsule 12 au travers de la fente 15. L'insertion de la capsule au travers de la fente 15 peut être réalisée de façon manuelle, par l'utilisateur lui-même, ou par des moyens de convoyage semi-automatiques ou automatiques non-décrits dans la présente demande.

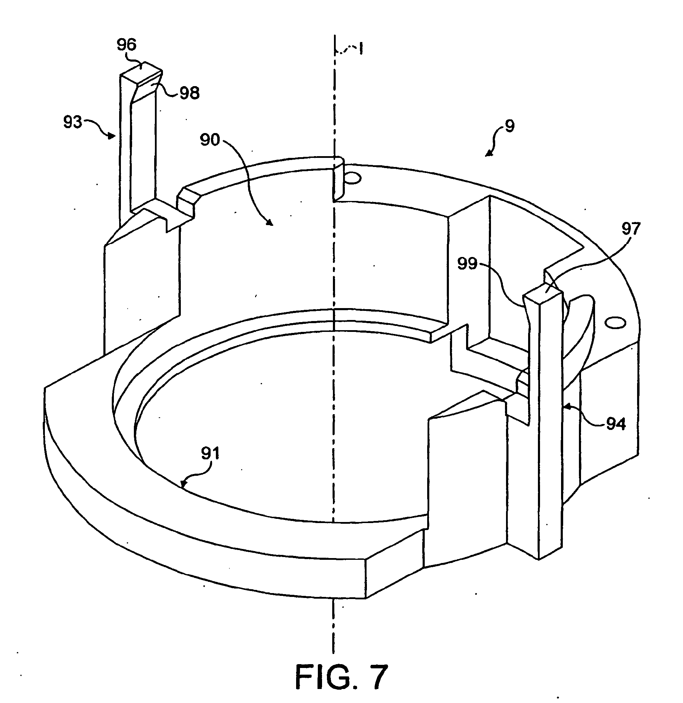

Selon l'invention, un élément de retenue et de positionnement 9 est prévu entre le sous-ensemble mobile 11 et le sous-ensemble fixe 10 pour retenir la capsule en place selon le plan de fermeture P du module. L'élément de retenue et de positionnement 9 est agencé de manière à arrêter la capsule selon plusieurs axes de direction au moyen d'une portion partiellement cylindrique partiellement ouverte 90 plus particulièrement visible sur la figure 7. L'élément possède d'autre part une portion de guidage annulaire 91 montée autour de la base 6 du sous-ensemble d'extraction fixe. De chaque côté de l'élément, l'élément se prolonge par deux doigts 93, 94 le long du corps 8 lesquels s'engagent dans des rainures de guidage 83, 84 du corps. Ces doigts sont reliés à l'extrémité supérieure des rainures par des ressorts de rappels élastiques 85 permettant, en position d'ouverture du module, de maintenir l'élément de retenue et de positionnement 9 dans une position de retenue; c'est à dire une position dans laquelle la portion cylindrique 90 obture partiellement l'espace 14, en particulier, la lumière de sortie 16 ainsi que les bords en direction perpendiculaire à la direction de cette lumière.

La portion cylindrique 90 de l'élément est positionnée de manière à entourer partiellement la zone de réception 2 de la capsule. Il est préférable que la portion 90 s'approche près de la périphérie de la zone de réception et qu'elle ait une forme géométriquement complémentaire des bords 120 de la capsule, de préférence, en s'étendant sur une circonférence comprise entre 100 et 180 degrés, de façon à maintenir la capsule selon plusieurs axes de direction et fournir ainsi un certain centrage de la capsule. La portion obture une partie de l'espace 14, préférentiellement, de manière à être centrée du côté opposé à la fente 15. L'élément 9 est ainsi monté autour de la base 6 de manière coaxiale, selon un axe I, par rapport au déplacement linéaire des moyens d'actionnement du sous-ensemble mobile, c'est à dire du piston 20 et de la douche 5.

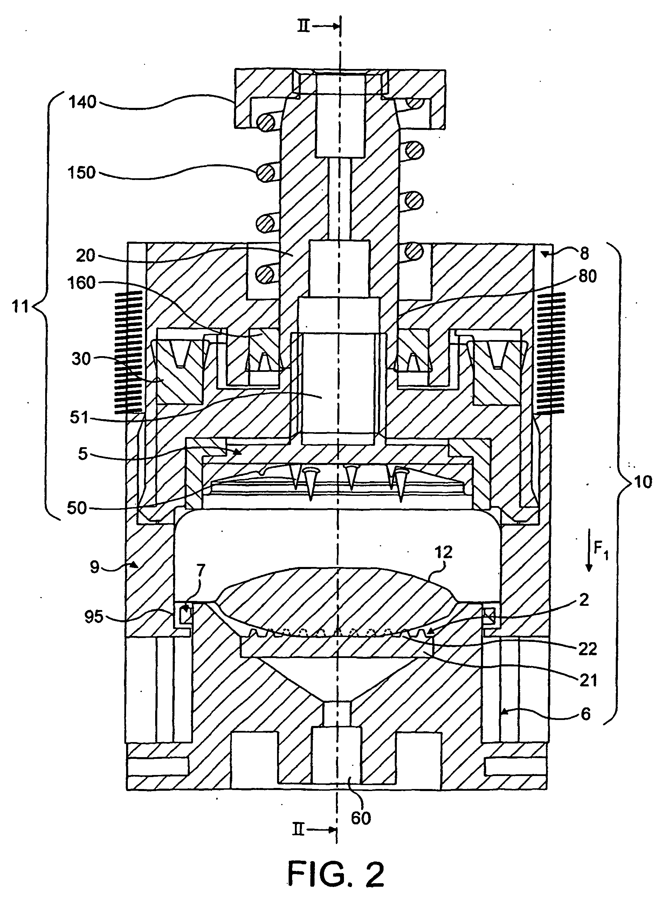

L'élément 9 est déplaçable le long d'une portion de cylindre 61 de la base entre une position de retenue et une position rétractée autorisant la fermeture des sous-ensembles d'extraction autour de la capsule. Dans la configuration des figures 1 et 2, l'élément 9 est en position de retenue et de positionnement de la capsule sous l'effet des ressorts de rappel 85 qui maintiennent l'élément en haut de la portion cylindre 61 de la base.

Le module d'extraction est muni aussi d'un mécanisme d'éjection 7 de la capsule qui a pour but de favoriser le décollement de la capsule après l'extraction et son éjection en dehors du module. L'éjection de la capsule doit en effet être fiable sur une nombre illimité de cycles d'extraction sans qu'il soit nécessaire de procéder à un enlèvement manuel d'une capsule pouvant être coincé ou collé dans le système. Le mécanisme d'éjection est prévu pour soulever la capsule et la décoller de la surface de la zone de réception 2. Lors de l'extraction, la capsule subit une pression importante en interne due à l'accumulation de l'eau dans l'enceinte de la capsule; l'ouverture de la capsule ayant lieu par rupture du matériau au contact des éléments en relief de la plaque de répartition de pression. Ainsi, après extraction, la surface de la capsule est comme emboutie dans les reliefs de la plaque de distribution de pression et il faut appliquer une force à partir de la surface de la zone de réception vers l'extérieur pour décoller la capsule et l'éjecter.

Le mécanisme d'éjection est configuré pour être mis en tension élastique lors de la fermeture des deux sous-ensembles d'extraction et être libérés de cette tension pour activer l'éjection au moment de la réouverture des deux sous-ensembles. Pour cela, le mécanisme d'éjection 7 est constitué d'un levier 70 comprenant une portion de bague 71 et une extrémité 72 articulée sur un axe d'articulation 62 de la base 6 du sous-ensemble d'extraction fixe. La portion de bague du levier a un diamètre sensiblement supérieur à la zone de réception 2 pour permettre la fermeture du module d'extraction, mais ce diamètre est inférieur au diamètre des bords de la capsule pour pouvoir s'engager avec les bords et décoller la capsule. De manière préférentielle, le levier 70 se loge, en position de repos, dans un retrait 95 formé dans l'élément de retenue et de positionnement 9. Pour déclencher le levier en position d'éjection, l'élément de retenue et de positionnement est muni d'éléments élastiques 92, en forme de lames fixées sur le rebord de l'élément 9, qui coopèrent avec l'extrémité 72 du levier. Les parties libres des éléments élastiques se prolongent au dessus du retrait 95 pour pouvoir venir au contact de l'extrémité du levier ce qui a pour effet de soulever la portion de bague lors de l'éjection.

Comme le montre les figures 2 et 4, il est prévu un mécanisme de verrouillage de l'élément de retenue et de positionnement 9 en position rétractée qui a pour but de maintenir l'élément 9 en position rétractée lors de l'éjection de la capsule par le moyen d'éjection. Le mécanisme de verrouillage comprend deux surfaces de butées 96, 97 positionnées à l'extrémité des doigts 93, 94 de l'éléments. Les surfaces 96, 97 coopèrent en verrouillage avec deux ergots 86 , 87 logés dans les rainures de guidage 83, 84 du corps lorsque l'élément 9 est abaissé le long de la base du sous-ensemble d'extraction fixe.

Enfin, il est aussi prévu un mécanisme de déverrouillage de l'élément de retenue et de positionnement 9 qui permet à celui-ci de recouvrer sa position initiale de retenue et de positionnement des figures 1 et 2. Ce mécanisme comprend des ergots 98, 99 à l'intérieur des doigts de l'élément 9 destinés à être activés par des crochets 220, 221 positionnés sur le pourtour du piston lors de la remontée du piston.

Le principe de fonctionnement du module d'extraction va maintenant être détaillé pour une meilleure compréhension des phases d'insertion, de fermeture, d'ouverture et d'éjection de la capsule.

La figure 3 montre le module en position d'ouverture des sous-ensemble d'extraction. Le module est préférablement en position d'inclinaison par rapport à l'horizontale de façon à favoriser l'insertion de la capsule ainsi que son éjection en bénéficiant de la force de gravité. L'inclinaison peut varier entre 5 et 90 degrés, préférablement 20 et 80 degrés. Sous l'effet du ressort de compression 150, le piston est maintenu en position rétractée pour libérer un espace suffisant 14. L'élément de retenue et de centrage 9 est engagé en en position de retenue et de positionnement d'une capsule grace aux ressorts de rappels 85. Une capsule peut donc être insérée au travers de la fente 15. Lors de l'insertion d'une capsule, les bords 120 de la capsule viennent en butée contre la portion de forme complémentaire 90 de l'élément permettant ainsi un centrage de la capsule au milieu de la zone d'extraction. La capsule repose donc librement sur la zone de réception 2 contre la plaque de répartition de pression 21.

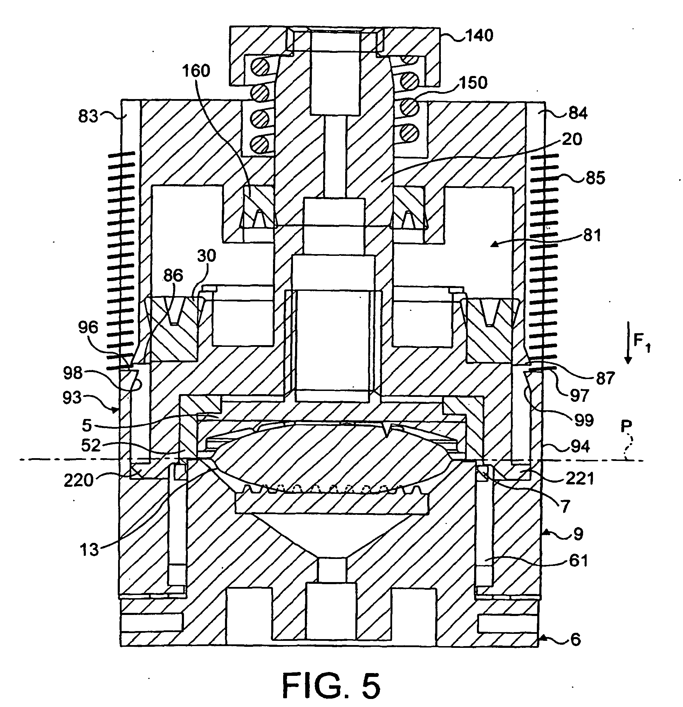

La figure 5 montre la phase de fermeture du module. Le piston 20 est activé par introduction d'un fluide hydraulique dans la chambre de pression 81. Le piston entraîne la douche 5 en fermeture contre la capsule selon la direction F1. Lors de la descente du piston, l'élément de retenue et de positionnement 9 est repoussé par les bords inférieurs du piston jusqu'à ce que l'élément atteigne une position rétractée en bas de la base 6. En fin de fermeture, le sous-ensemble mobile force sous tension le mécanisme d'éjection 7. En particulier, le joint 52 de douche maintient le levier 70 en position repliée alors que les éléments élastiques de l'éléments 9 sont soumis à une flexion élastique due au mouvement relatif de l'élément 9 par rapport à l'extrémité 72 du levier. Lorsque l'élément 9 descend, l'extrémité, qui elle est fixe, force les lames mobiles 92 à fléchir; ce qui met alors sous tension le mécanisme d'éjection.

Lorsque le module est fermé, l'élément 9 est alors verrouillé automatiquement en position rétractée par le mécanisme de verrouillage. Plus précisément, les surfaces de butée 96, 97 des doigts de l'élément 9 viennent alors coopérer contre les surfaces de butée 86, 87 du corps; ce qui immobilise et verrouille l'élément 9.

L'opération d'extraction qui consiste à extraire l'extrait liquide sous pression d'eau chaude est connue en soi et ne nécessite pas d'être détaillée dans la présente demande.

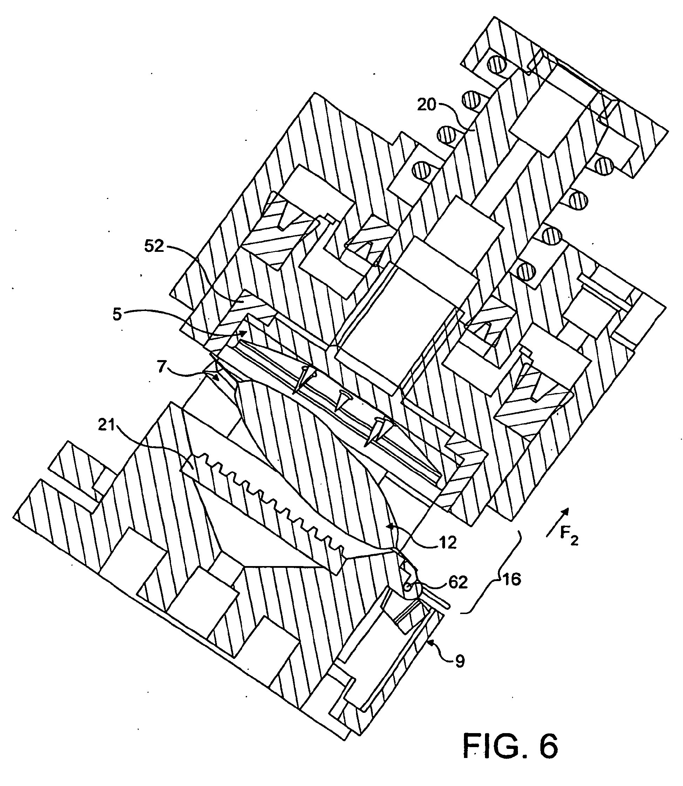

La figure 6 montre la phase de réouverture et d'éjection. La réouverture est commandée par la remontée du piston 20 et de la douche 5 selon la direction F2. L'élément 9 reste verrouillé par le mécanisme de verrouillage précédemment décrit alors que la remontée du piston libère progressivement le mécanisme d'éjection 7 par l'effet de relâchement de la tension des lames emmagasinée lors de la fermeture. Le levier du mécanisme d'éjection pivote alors autour de l'axe d'articulation 62, ce qui a pour effet de décoller la capsule et de l'incliner davantage par rapport à la verticale du côté de la lumière de sortie 16. La capsule peut alors tomber par gravité dans un réceptacle pour les capsules vides (non représenté). L'action du mécanisme d'éjection se fait de manière concomitante à la remontée du piston. En fin de course du piston, l'élément 9 est alors libéré par les crochets 220, 221 du piston qui agissent sur les ergots 98, 99 ce qui a pour effet d'écarter les doigts 93, 94 et désengager les surfaces de butées. L'élément 9 est alors rappelé en position de retenue et de positionnement par les ressorts de rappel 84, 85.

L'invention concerne un module d'extraction pouvant être installé dans une machine ou un distributeur de boisson utilisant n'importe quel type de capsule prédosée. Une machine ou distributeur peut contenir un ou plusieurs modules selon la capacité nécessaire. Le module de l'invention procure des cycles de chargement/extraction/éjection plus fiables et plus rapides que ceux habituellement connus.

## Revendications

1. Module d'extraction sous pression (1) pour la préparation d'une boisson à partir d'une capsule (12) contenant une substance à extraire comprenant:
des moyens d'extractions comprenant un premier sous-ensemble d'extraction (10) et un second sous-ensemble d'extraction mobile (11) en fermeture contre le premier sous-ensemble de façon à former en position fermée une chambre d'extraction (13) enserrant la capsule dans un plan de fermeture (P), et de façon à maintenir, en position d'ouverture, un espace suffisant (14) entre les deux sous-ensembles permettant l'insertion de la capsule entre les deux sous-ensembles,
un moyen de retenue et de positionnement (9) de la capsule ; ledit moyen étant capable d'être repoussé linéairement par le second sous-ensemble mobile (11):
le moyen de retenue et de positionnement (9) étant monté de manière coaxiale par rapport au sous-ensemble d'extraction mobile (11) et étant déplaçable linéairement selon le même axe que ledit sous-ensemble ; le moyen de retenue étant configuré entre les deux sous-ensembles (10, 11) lors de l'insertion de la capsule de façon à fermer partiellement l'espace d'ouverture (14) pour assurer la retenue de la capsule entre les deux sous-ensembles même en position inclinée du module;
**caractérisé en ce que** le premier sous-ensemble (10) comprend une base (6) et **en ce que** le moyen de retenue et de positionnement (9) est monté autour de la base (6) dudit premier sous-ensemble (10) pour être repoussé dans une position rétractée en dehors de la chambre d'extraction de façon à permettre la fermeture des deux sous-ensembles (10, 11) autour de la capsule, le moyen de retenue et de positionnement étant configuré comme un seul élément capable de retenir en centrage la capsule dans l'espace d'ouverture selon plusieurs axes selon le plan de fermeture (P).

2. Module d'extraction selon la revendication 1, **caractérisé en ce que** le moyen de retenue et de positionnement (9) possède une portion de cylindre ouvert (90) destinée à retenir et centrer la capsule (12) et une portion de guidage annulaire (91) montée autour de la base (6) du sous-ensemble d'extraction (11).

3. Module d'extraction selon l'une quelconque des revendications précédentes, **caractérisé en ce que** des moyens d'éjection (7) de la capsule sont prévus pour éjecter la capsule en dehors du module.

4. Module d'extraction selon la revendication 3, **caractérisé en ce que** les moyens d'éjection (7) pour éjecter la capsule sont commandés, lors de l'ouverture, par l'action de retour linéaire en dégagement du second sous-ensemble mobile (11) par rapport au premier sous-ensemble d'extraction (10).

5. Module d'extraction selon la revendication 3, **caractérisé en ce que** le moyen de retenue et de positionnement (9) est verrouillé, en position repoussée, lors de la fermeture des sous-ensembles d'extraction (10, 11) et est déverrouillé, en position de retenue, seulement après l'éjection de la capsule par les moyens d'éjection (9).

6. Module d'extraction selon la revendication 3, **caractérisé en ce que** le déverrouillage du moyen de retenue et de positionnement (9) en position repoussée est réalisé directement par l'action de retour linéaire en dégagement du sous-ensemble d'extraction mobile (11).

7. Module selon la revendication 6, **caractérisé en ce que** le moyen de retenue et de positionnement (9) est déverrouillé en fin de course du retour linéaire du sous-ensemble d'extraction mobile (11).

8. Module selon l'une quelconque des revendications 3 à 7, **caractérisé en ce que** les moyens d'éjection (7) sont configurés de manière à éjecter la capsule (12) hors du module dans une direction différente de la direction d'insertion, et de préférence, en direction sensiblement opposée.

9. Module selon l'une des revendications 3 à 8 **caractérisé en ce que** les moyens d'éjection (7) sont mis en tension élastique lors de la fermeture des deux sous-ensembles (10, 11) et libérés de leur tension élastique pour activer l'éjection au moment de la réouverture des deux sous-ensembles.

10. Module selon la revendication 9, **caractérisé en ce que** les moyens d'éjection (7) sont mis en tension élastique au contact d'au moins un élément élastique (92) de mise sous tension faisant partie du moyen de retenue et de positionnement.

11. Module selon l'une des revendications 9 ou 10, **caractérisé en ce que** les moyens d'éjection (7) sont constitués d'un levier (70) en forme de bague, articulé sur le sous-ensemble d'extraction fixe; ledit levier étant mis en tension au contact d'au moins une lame élastique (92) supportée par le moyen de retenue et de positionnement (9).

12. Module selon la revendication 1, **caractérisé en ce que** le sous-ensemble d'extraction mobile (11) comprend des moyens d'actionnement linéaires du type à piston (20, 30, 140, 150) activables en fermeture par des moyens hydrauliques ou électriques.

13. Module selon la revendication 1, **caractérisé en ce que** le premier sous-ensemble d'extraction (10) est fixe.

14. Module selon la revendication 13, **caractérisé en ce que** le premier sous-ensemble d'extraction (10) comprend une zone de réception de la capsule muni d'éléments en relief pour l'ouverture de la capsule.

15. Module selon la revendication 14, **caractérisé en ce que** le second sous-ensemble mobile comprend une zone de réception complémentaire (5) de la capsule et des moyens d'alimentation en eau (50, 51) de la capsule.

16. Module selon la revendication 15, **caractérisé en ce que** les moyens d'alimentation en eau comprennent des éléments de perçage (50) de la capsule.

## Claims

1. A pressure-extraction module (1) for preparing a beverage from a capsule (12) containing a substance to be extracted, comprising:
extraction means comprising a first extraction sub-assembly (10) and a second extraction sub-assembly (11) movable for the purpose of closure towards the first sub-assembly so as to form in the closed position an extraction chamber (13) holding the capsule in a closure plane (P), and so as to maintain, in the open position, a space (14) between the two sub-assemblies sufficient to allow insertion of the capsule between the two sub-assemblies,
a retention and positioning means (9) for the capsule; said means being capable of being pushed back linearly by the second, mobile sub-assembly (11);
the retention and positioning means (9) being mounted coaxially relative to the mobile extraction sub-assembly (11) and being displaceable linearly along the same axis as said sub-assembly, the retention means being configured between the two sub-assemblies (10, 11) at the time of insertion of the capsule in such a way as partially to close the open space (14) to ensure retention of the capsule between the two sub-assemblies even when the module is in an inclined position;
**characterised in that** the first sub-assembly (10) comprises a base (6) and **in that** the retention and positioning means (9) is mounted about the base (6) of said first sub-assembly (10) so as to be pushed back into a retracted position outside the extraction chamber in such a way as to allow closure of the two sub-assemblies (10, 11) about the capsule, the retention and positioning means being configured as a single element capable of retaining the capsule in a centred position in the open space along a plurality of axes in the closure plane (P).

2. An extraction module according to claim 1, **characterised in that** the retention and positioning means (9) comprises an open cylinder portion (90) designed to retain and centre the capsule (12) and an annular guide portion (91) mounted about the base (6) of the extraction sub-assembly (11).

3. An extraction module according to any one of the preceding claims, **characterised in that** capsule ejection means (7) are provided to eject the capsule out of the module.

4. An extraction module according to claim 3, **characterised in that** the ejection means (7) for ejecting the capsule are controlled, during opening, by the linear disengaging return action of the second mobile sub-assembly (11) relative to the first extraction sub-assembly (10).

5. An extraction module according to claim 3, **characterised in that** the retention and positioning means (9) is locked, in the pushed-back position, during closure of the extraction sub-assemblies (10, 11) and is unlocked, in the retention position, only after ejection of the capsule by the ejection means (9).

6. An extraction module according to claim 3, **characterised in that** unlocking of the retention and positioning means (9) in the pushed-back position is effected directly by the linear disengaging return action of the mobile extraction sub-assembly (11).

7. An extraction module according to claim 6, **characterised in that** the retention and positioning means (9) is unlocked at the end of the linear return travel of the mobile extraction sub-assembly (11).

8. A module according to any one of claims 3 to 7, **characterised in that** the ejection means (7) are configured so as to eject the capsule (12) from the module in a different direction from the insertion direction and, preferably, in a substantially opposite direction.

9. A module according to one of claims 3 to 8, **characterised in that** the ejection means (7) are placed under resilient tension at the time of closure of the two sub-assemblies (10, 11) and released from the resilient tension to which they are subject so as to actuate ejection at the moment of reopening of the two sub-assemblies.

10. A module according to claim 9, **characterised in that** the ejection means (7) are placed under resilient tension on contact with at least one resilient tensioning element (92) constituting part of the retention and positioning means.

11. A module according to one of claims 9 or 10, **characterised in that** the ejection means (7) consist of a lever (70) in the form of a ring, articulated to the fixed extraction sub-assembly; said lever being placed under tension on contact with at least one resilient strip (92) supported by the retention and positioning means (9).

12. A module according to claim 1, **characterised in that** the mobile extraction sub-assembly (11) comprises linear actuating means of the piston type (20, 30, 140, 150), actuatable to effect closure by hydraulic or electric means.

13. A module according to claim 1, **characterised in that** the first extraction sub-assembly (10) is fixed.

14. A module according to claim 13, **characterised in that** the first extraction sub-assembly (10) comprises a capsule receiving zone provided with relief elements for opening the capsule.

15. A module according to claim 14, **characterised in that** the second, mobile sub-assembly comprises a complementary capsule receiving zone (5) and means (50, 51) of supplying the capsule with water.

16. A module according to claim 15, **characterised in that** the water supply means comprise elements (50) for piercing the capsule.

## Patentansprüche

1. Druckextraktionsmodul (1) für die Zubereitung eines Getränks aus einer Kapsel (12), die eine zu extrahierende Substanz enthält, umfassend:
- eine Extraktionseinrichtung, die eine erste Extraktionsuntereinheit (10) und eine zweite bewegliche Extraktionsuntereinheit (11) umfasst, die bei der Schließung an der ersten Untereinheit anliegt, so dass in geschlossener Stellung eine Extraktionskammer (13) gebildet wird, die die Kapsel in einer Schließebene (P) einschließt, und in offener Stellung ein ausreichender Raum (14) zwischen den beiden Untereinheiten beibehalten wird, der die Einführung der Kapsel zwischen die beiden Untereinheiten gestattet,
eine Einrichtung (9) zum Halten und Positionieren der Kapsel, wobei diese Einrichtung durch die zweite bewegliche Untereinheit (11) linear weggedrückt werden kann,
wobei die Halte- und Positionierungseinrichtung (9) koaxial zur beweglichen Extraktionsuntereinheit (11) angeordnet ist und in derselben Achse wie diese Untereinheit linear beweglich ist, wobei die Halteeinrichtung zwischen den beiden Untereinheiten (10, 11) bei der Einführung der Kapsel so ausgebildet ist, dass der Öffnungsraum (14) teilweise geschlossen wird, um den Halt der Kapsel zwischen den beiden Untereinheiten selbst in Schrägstellung des Moduls zu gewährleisten,
**dadurch gekennzeichnet, dass** die erste Untereinheit (10) eine Basis (6) aufweist und dass die Halte- und Positionierungseinrichtung (9) um die Basis (6) der ersten Untereinheit (10) herum montiert ist, um aus der Extraktionskammer heraus in eine eingezogene Stellung zurückgedrückt zu werden, so daß die Schließung der beiden Untereinheiten (10, 11) um die Kapsel herum gestattet wird, wobei die Halte- und Positionierungseinrichtung als ein einziges Element ausgebildet ist, das die Kammer im Öffnungsraum gemäß mehreren Achsen in der Schließebene (P) zentriert halten kann.

2. Extraktionsmodul nach Anspruch 1, **dadurch gekennzeichnet, dass** die Halte- und Positionierungseinrichtung (9) einen offenen Zylinderabschnitt (90), der dazu bestimmt ist, die Kapsel (12) zu halten und zu zentrieren, und einen ringförmigen Führungsabschnitt (91) aufweist, der um die Basis (6) der Extraktionsuntereinheit (11) herum angeordnet ist.

3. Extraktionsmodul nach einem der vorhergehenden Ansprüche, **dadurch gekennzeichnet, dass** eine Einrichtung (7) zum Ausstoßen der Kapsel vorgesehen sind, um die Kapsel aus dem Modul auszustoßen.

4. Extraktionsmodul nach Anspruch 3, **dadurch gekennzeichnet, dass** die Ausstoßeinrichtung (7) zum Ausstoßen der Kapsel bei der Öffnung durch die lineare Freigabe-Rückbewegung der zweiten beweglichen Untereinheit (11) bezüglich der ersten Extraktionsuntereinheit (10) gesteuert wird.

5. Extraktionsmodul nach Anspruch 3, **dadurch gekennzeichnet, dass** die Halte- und Positionierungseinrichtung (9) in zurückgedrückter Stellung bei der Schließung der Extraktionsuntereinheiten (10, 11) verriegelt ist und in Haltestellung erst nach dem Ausstoßen der Kapsel durch die Ausstoßeinrichtung (9) entriegelt wird.

6. Extraktionsmodul nach Anspruch 3, **dadurch gekennzeichnet, dass** die Entriegelung der Halte- und Positionierungseinrichtung (9) in zurückgedrückter Stellung direkt durch die lineare Freigabe-Rückbewegung der beweglichen Extraktionsuntereinheit (11) vorgenommen wird.

7. Modul nach Anspruch 6, **dadurch gekennzeichnet, dass** die Halte- und Positionierungseinrichtung (9) am Ende der linearen Rückbewegung der beweglichen Extraktionsuntereinheit (11) entriegelt wird.

8. Modul nach einem der Ansprüche 3 bis 7, **dadurch gekennzeichnet, dass** die Ausstoßeinrichtung (7) so ausgebildet ist, dass die Kapsel (12) aus dem Modul in einer anderen Richtung als der Einführungsrichtung ausgestoßen wird, und zwar vorzugsweise in einer im wesentlichen entgegengesetzten Richtung.

9. Modul nach einem der Ansprüche 3 bis 8, **dadurch gekennzeichnet, dass** die Ausstoßeinrichtung (7) bei der Schließung der beiden Untereinheiten (10, 11) unter elastische Spannung gesetzt wird und von ihrer elastischen Spannung befreit wird, um den Ausstoß zum Zeitpunkt der Wiederöffnung der beiden Untereinheiten zu aktivieren.

10. Modul nach Anspruch 9, **dadurch gekennzeichnet, dass** die Ausstoßeinrichtung (7) im Kontakt mit mindestens einem elastischen Element (92) zum Unter-Spannung-Setzen, das einen Teil der Halte- und Positionierungseinrichtung bildet, unter elastische Spannung gesetzt wird.

11. Modul nach einem der Ansprüche 9 oder 10, **dadurch gekennzeichnet, dass** die Ausstoßeinrichtung (7) aus einem ringförmigen Hebel (70) besteht, der auf der feststehenden Extraktionsuntereinheit angelenkt ist, wobei dieser Hebel im Kontakt mit mindestens einem von der Halte- und Positionierungseinrichtung (9) getragenen Federblatt (92) unter Spannung gesetzt wird.

12. Modul nach Anspruch 1, **dadurch gekennzeichnet, dass** die bewegliche Extraktionsuntereinheit (11) eine lineare Betätigungseinrichtung vom Typ Kolben (20, 30, 140, 150) umfasst, die durch hydraulische oder elektrische Mittel in Richtung Schließung aktivierbar ist.

13. Modul nach Anspruch 1, **dadurch gekennzeichnet, dass** die erste Extraktionsuntereinheit (10) feststehend ist.

14. Modul nach Anspruch 13, **dadurch gekennzeichnet, dass** die erste Extraktionsuntereinheit (10) eine Zone zur Aufnahme der Kapsel umfasst, die mit vorstehenden Elementen zum Öffnen der Kapsel versehen ist.

15. Modul nach Anspruch 14, **dadurch gekennzeichnet, dass** die zweite bewegliche Untereinheit eine ergänzende Zone (5) zur Aufnahme der Kapsel und eine Einrichtung (50, 51) zur Speisung der Kapsel mit Wasser umfasst.

16. Modul nach Anspruch 15, **dadurch gekennzeichnet, dass** die Einrichtung zur Speisung mit Wasser Elemente (50) zum Durchbohren der Kapsel umfasst.
